Europäisches Patentamt

European Patent Office

Office européen des brevets

(19)

(11) Publication number: **0 310 432 B1**

# EUROPEAN PATENT SPECIFICATION

(12)

(45) Date of publication of patent specification: **30.03.94**   (51) Int. Cl.⁵: **H04N 1/04**, H04N 1/21

(21) Application number: **88309127.4**

(22) Date of filing: **30.09.88**

(54) **Data converter and image reader using the same.**

(30) Priority: **30.09.87 JP 247627/87**

(43) Date of publication of application:
**05.04.89 Bulletin 89/14**

(45) Publication of the grant of the patent:
**30.03.94 Bulletin 94/13**

(84) Designated Contracting States:
**DE GB**

(56) References cited:
**EP-A- 0 069 325**
**FR-A- 2 385 112**
**FR-A- 2 551 283**
**US-A- 4 240 117**
**US-A- 4 296 441**

(73) Proprietor: **SHARP KABUSHIKI KAISHA**
**22-22 Nagaike-cho**
**Abeno-ku**
**Osaka 545(JP)**

(72) Inventor: **Karita, Toshiaki**
**98 Daizukoshi**
**Sakurai-shi Nara-ken(JP)**
Inventor: **Masuda, Ichizo**
**12-19 Minoyama-cho**
**Yamatokouriyama-shi Nara-ken(JP)**

(74) Representative: **Brown, Kenneth Richard et al**
**R.G.C. Jenkins & Co.**
**26 Caxton Street**
**London SW1H 0RJ (GB)**

EP 0 310 432 B1

## Description

The present invention relates to a data converter and an image reader using the same. More specifically, it relates to a data converter which is applied to a facsimile machine, an image scanner or the like to convert read image data, and an image reader using the same.

In a facsimile machine, for example, an original image is read pixel by pixel. A reading sensor such as a one-dimensional CCD (charge coupled device) performs main scanning and subscanning from left to right and from top to bottom along the surface of the original, thereby to read the original image over the entire surface. In case of recording, a recording head such as a thermal head performs similar scanning with respect to a recording paper. Such a scanning method is set by the so-called G3 standard in the facsimile machine.

A facsimile machine of the so-called serial system has come into use in recent years. One such machine is known from US-A-4,240,117. In such a facsimile machine, a reading sensor having a plurality of pixels along the subscanning direction in the G3 standard is mechanically moved along the main scanning direction. After such single movement, the reading sensor is moved in the subscanning direction by a distance corresponding to the number of pixels thereof, thereby to read an original image. In a facsimile machine of the serial system, further, a recording head also has a plurality of pixels along the subscanning direction in the G3 standard like the reading sensor, to perform recording by scanning a recording paper in a similar manner to the reading sensor.

The aforementioned facsimile machine of the serial system has been widely used in recent years, since the pixel numbers of the reading sensor and the recording head can be decreased thereby to reduce the cost. For example, although a device having 2048 pixels is required for a reading sensor or a recording head electrically performing main scanning in accordance with the G3 standard, such a device need only have 64 to 128 pixels in the serial system.

In a facsimile machine, a transmitted image cannot be reproduced in a receiving area unless the order of transmission of image information is unified. The aforementioned G3 standard is adapted to unify such order.

In the facsimile machine of the serial system, conversion is required in order to transpose the order of image data in transmission/receiving since the scanning method thereof is totally different from that of the G3 standard. Such conversion of the image data is performed in the so-called hardware manner by various types of arithmetic circuits or in the so-called software manner by a CPU (central processing unit).

In the aforementioned method of converting image data in the hardware manner, however, complicated circuit structure of an extremely large scale is required in order to cope with the main scanning length and the pixel number of the facsimile machine in a counterpart, as well as to cope with variation in main scanning length. In the method of converting image data in the software manner, on the other hand, the processing speed of the CPU comes into question since pixel-by-pixel processing, i.e., bitwise processing, cannot be performed at a high speed, although processing in units of 8 or 16 bits is quickly performed. When the CPU is implemented by the Z80 processor to receive basic clocks at a frequency of 6 MHz, for example, about 25 msec. is required for each scanning line. This is the limit time in consideration of the time for image processing such as compression or expansion.

Accordingly, a principal object of the present invention is to provide a data converter which can increase the processing speed with circuit structure of a small scale.

Another object of the present invention is to provide an image reader using a data converter whose processing speed is increased with circuit structure of a small scale.

In accordance with a first aspect of the invention, there is provided a data converter for performing matrix conversion operations on data, comprising:

a plurality of storage/transfer means for the storage of respective input multi-bit data;

a plurality of input lines, one for each bit of said multi-bit data, for the parallel input of multi-bit data to a selected one of said storage/transfer means;

control means for loading multi-bit data on said plurality of input lines selectively into said storage/transfer means until each storage/transfer means stores said respective multi-bit data, and for transferring data serially out of each of said storage/transfer means for the parallel output of converted multi-bit data each bit of which comprises the output of a respective one of said storage/transfer means.

According to the present invention, therefore, data having matrix ordering stored in a plurality of storage/transfer means can be subjected to arrangement/arithmetic processing at a high speed. Thus, the processing speed for data conversion can be improved while such data conversion can be implemented through circuit structure of a small scale.

In accordance with a second aspect of the invention, there is provided an image reader in which an image sensing means is arranged to scan an original in a main scan direction and intermittently to shift in a sub-scan direction, and comprises a row of sensors extending in said sub-scan direction so that the output of each individual sensor for one scan in the main scan direction provides the image data for one main scan line, said image reader comprising:

first memory means for storing as input data the output of said image sensing means corresponding to at least one scan in said main scan direction;

a data converter as aforesaid, for performing matrix conversion operations on groups of input data stored in said first memory means to generate respective groups of output data; and

second memory means for storing said groups of output data, wherein:

said output of the image sensing means comprises a succession of sub-scan line image data, each sub-scan line comprising a respective bit of data from each of said sensors, and contains the data bits corresponding to a number of main scan lines equal to the number of sensors in the image sensing means;

each group of input data comprises the mutually same bits of a group of successive sub-scan lines;

each group of output data comprises the mutually same bits of a group of successive main scan lines;

data is stored at addresses in said first memory means in the sequence of generation of said sub-scan line image data by said image sensing means; and

data is stored at addresses in said second memory means in the sequence of successive main scan lines.

According to the present invention, therefore, a data converter having circuit structure of a small scale with a high processing speed can be applied to an image reader such as a facsimile machine or an image scanner.

The present invention will become more apparent from the following detailed description of an embodiment thereof, taken in conjunction with the accompanying drawings, in which:

Fig. 1 is a block diagram showing basic structure of a facsimile machine according to an embodiment of the present invention;

Fig. 2A is a diagram for illustrating a conventional scanning method in accordance with the G3 standard;

Fig. 2B is a diagram for illustrating scanning performed by the facsimile machine according to the embodiment of the present invention;

Fig. 3 is a diagram for illustrating the mode of storage in a buffer memory shown in Fig. 1;

Fig. 4 is a diagram for illustrating the mode of storage in a transmission memory shown in Fig. 1;

Fig. 5 is a block diagram showing basic structure of a matrix conversion circuit;

Fig. 6 is a timing chart for illustrating the operation of the matrix conversion circuit; and

Fig. 7 illustrates signals derived in respective parts of the facsimile machine.

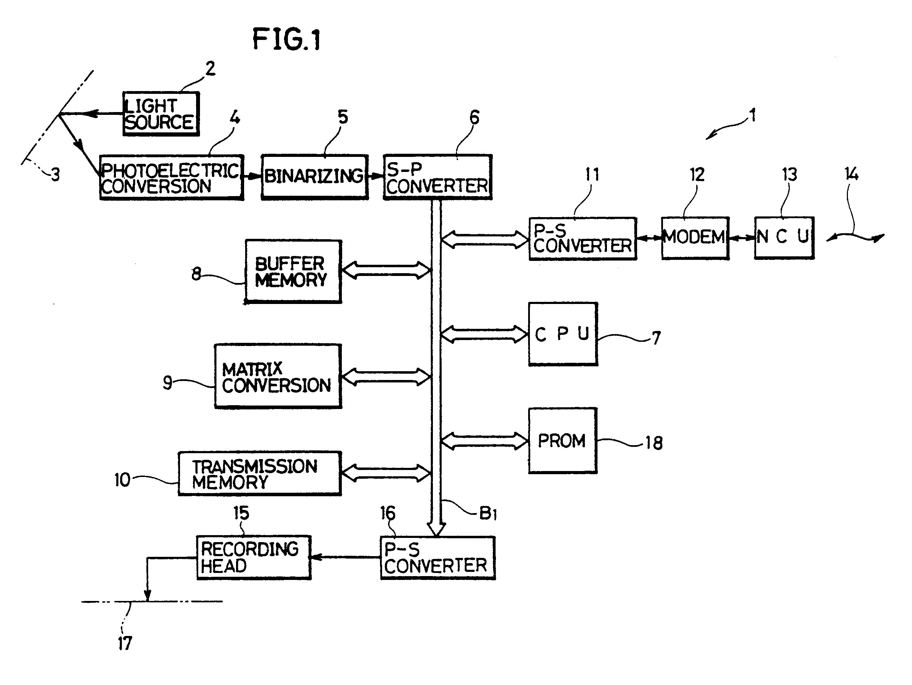

Fig. 1 is a block diagram showing basic structure of a facsimile machine 1 according to an embodiment of the present invention. Light emitted from a light source 2 is applied to the surface of an original 3, so that scattered light from the original surface is applied to a photoelectric conversion element 4, which is implemented by a one-dimensional CCD (charge coupled device) or the like for reading the original 3 in the serial system. The photoelectric conversion element 4 outputs a signal whose level corresponds to the intensity of the applied light, i.e., a signal whose level corresponds to the luminance of the read pixel, to supply the same to a binarizing circuit 5. The binarizing circuit 5 determines whether the actually read pixel is a black one or a white one on the basis of the level of the supplied signal. In other words, the binarizing circuit 5 creates one-bit data "1" or "0". Thus, the binarizing circuit 5 assigns the data "1" or "0" to the read pixel.

The output from the binarizing circuit 5 is supplied to a serial-to-parallel converter (hereinafter referred to as "S-P converter") 6, to be converted into 8-bit data, for example. The 8-bit data is supplied for storage to a buffer memory 8 through a data bus B1 under the control of a CPU (central processing unit) 7. The CPU 7 is adapted to control respective parts of the facsimile machine 1, transfer data, etc. on the basis of programs stored in a PROM (programmable read only memory) 18.

The buffer memory 8 sequentially stores image data in the aforementioned manner, while the CPU 7 simultaneously fetches image data already stored in the buffer memory 8, to supply the same to a matrix conversion circuit 9. The matrix conversion circuit 9 converts the image data as hereinafter described, to supply the converted data to a transmission memory 10. The data supplied to the transmission memory 10 are sequentially fetched at a speed which is determined by the transmission rate for data transmission through a telephone line 14, and supplied to a parallel-to-serial converter (hereinafter referred to as "P-S converter") 11 to be converted into serial data. The serialized data are modulated by a modem 12, and transmitted to a receiving facsimile machine (not shown) through an NCU (network control unit) 13 and the telephone line 14. Basic operation of the facsimile 1 is thus performed in transmission.

In operation for receiving, on the other hand, a received signal is demodulated through the NCU 13 and the modem 12, to be converted into a digital signal. The digitalized signal is converted into parallel (for example, 8-bit) data by the P-S converter 11. Such data are temporarily stored in the transmission memory 10, to be supplied to the matrix conversion circuit 9 upon storage of data by 2 kilobytes, for example. The data converted by the matrix conversion circuit 9 are sequentially stored in the buffer memory 8.

The buffer memory 8, supplies data to a parallel-to-serial converter (hereinafter referred to as "P-S converter") 16 for conversion into serial data upon storage of the data in correspondence to single scanning by a recording head 15 which is implemented by a thermal head or the like, for performing recording in the serial system, i.e., single movement in a main scanning direction in scanning along the G3 standard. The serialized data are supplied to the recording head 15, which in turn performs recording on a recording paper 17 on the basis of the supplied data. The buffer memory 8 receives subsequent data during data output operation. Thus, capacity for double scanning operation of the photoelectric conversion element 4/recording head 15 is required for the buffer memory 8.

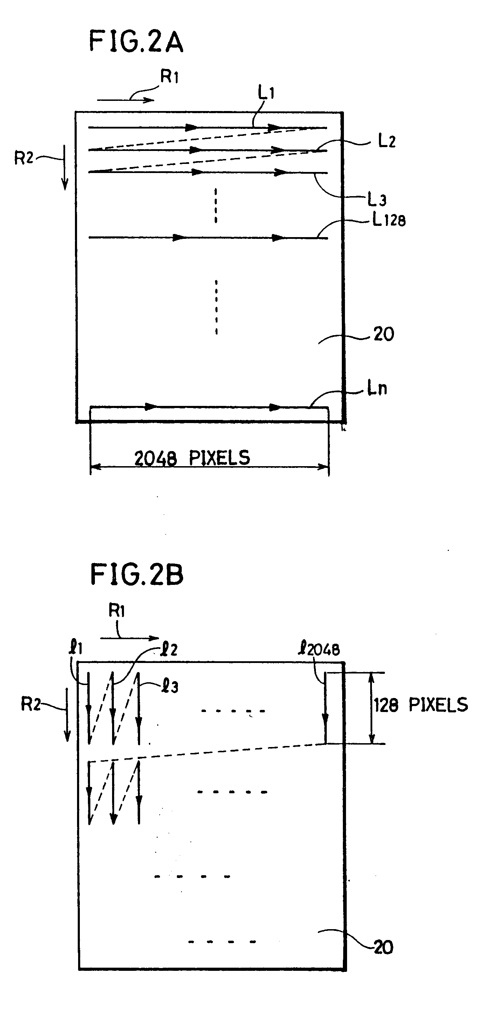

Fig. 2A illustrates a conventional method of scanning an original 20 in size 4 of series B (hereinafter referred to as "B-4 size") of Japanese Industrial Standards to the G3 standard, and Fig. 2B shows scanning performed in the facsimile machine 1 according to the embodiment of the present invention. Referring to Fig. 2A, main scanning is performed along an arrow R1 and subscanning is performed along an arrow R2 in the G3 standard. Scanning expressed by $\underline{n}$ scanning lines L1, L2, ..., L128, ..., Ln is thus performed to read or record the original 20. With respect to the original 20 of the B-4 size, for example, one scanning line corresponds to 2048 pixels, whereby image data corresponding to one scanning line is expressed by data of 2048 bits.

Referring to Fig. 2B, 128 pixels are read along an arrow R2, for example, and similar reading is sequentially performed along an arrow R1 in the facsimile 1. With respect to the original 20 of the B-4 size, therefore, scanning expressed by 2048 scanning lines $\ell$1, $\ell$2, ..., $\ell$2048 is first performed and then similar scanning is performed with slippage by 128 pixels along the arrow R2. Such scanning is sequentially performed to read the original 20. Similar scanning is performed also in recording. Thus, the photoelectric conversion element 4 or the recording head 15 makes single movement from an upstream end of the original 20 along the arrow R1 to a downstream end (such movement is hereinafter referred to as "single scanning"), thereby to read or record image information corresponding to the scanning lines L1 to L128 shown in Fig. 2A.

In the facsimile machine 1, image information stored in the buffer memory 8 in transmission is stored in order expressed by the scanning lines shown in Fig. 2B, which order must be converted into that expressed by the scanning lines shown in Fig. 2A. Conversion reverse to the above is required in receiving. Description is now made on such data conversion performed in the facsimile machine 1.

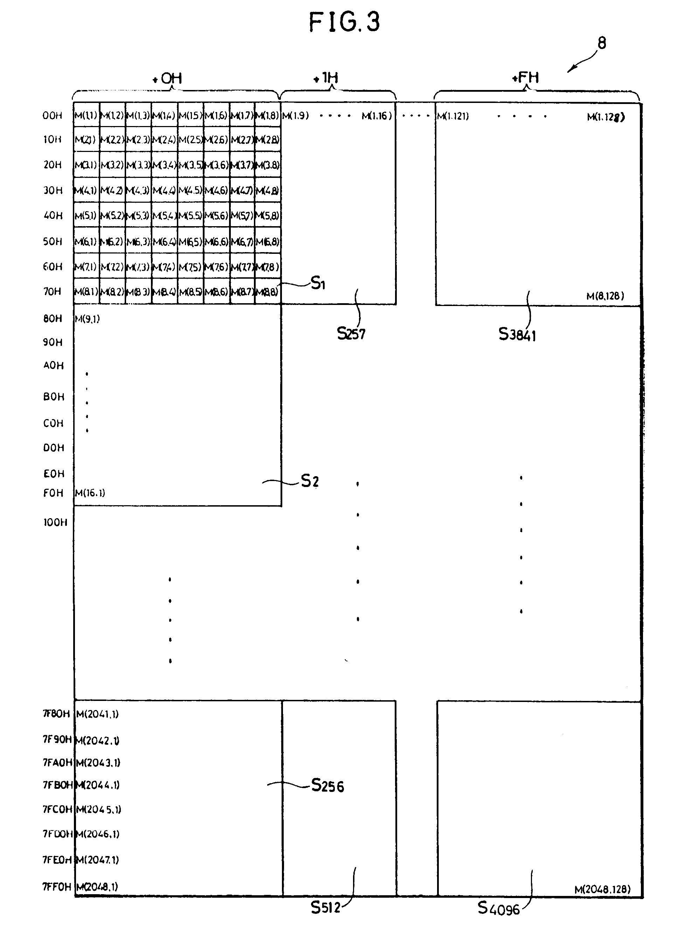

Fig. 3 shows a memory map of the buffer memory 8. Although the buffer memory 8 requires capacity for double scanning operation:

$$128 \times 2048 \times 2 = 512 \text{ k bits} \qquad (1)$$

as hereinabove described, the same has only storage areas of 256 k bits in Fig. 3. While the data of 256 k bits are being converted, subsequent image data are inputted in the storage areas of remaining 256 k bits.

The buffer memory 8 is assigned with addresses 000H, 001H, ..., 7FFFH (H: hexadecimal number) per byte, so that image data corresponding to the scanning line $\ell$1 shown in Fig. 2 are stored in 16-byte storage areas of addresses 000H to 00FH, those corresponding to the scanning line $\ell$2 are stored in the storage areas of the addresses 010H to 01FH, ... and those corresponding to the scanning line $\ell$2048 are stored in the storage areas of the addresses 7FF0H to 7FFFH respectively, for example.

In this embodiment, image data are processed in units of eight bytes. The 8-byte image data are those stored in a unit area S1 formed by the addresses 000H, 010H, 020H, 030H, 040H, 050H, 060H and 070H, a unit area S2 formed by the addresses 080H, 090H, 0A0H, 0B0H, 0C0H, 0D0H, 0E0H and 0F0H, ..., a unit area S256 formed by the addresses 7F80H, 7F90H, 7FA0H, 7FB0H, 7FC0H, 7FD0H, 7FE0H and 7FF0H, a unit area S257 formed by the addresses 001H, 011H, 021H, 031H, 041H, 051H, 061H and 071H, ... and a unit area S4096 formed by the addresses 7F8FH, 7F9FH, 7FAFH, 7FBFH, 7FCFH, 7FDFH, 7FEFH and 7FFFH respectively.

For convenience of illustration, the data stored in the entire buffer memory 8 are expressed in the form of a matrix and data per bit is expressed as data M(i, j) (i and j represent such integers that $1 \leq i \leq 2048$ and $1 \leq j \leq 128$). Thus, image data of data M(1, 1) to M(1, 8) are stored in the address 000H, for example. Data corresponding to the scanning line $\ell$1 are expressed as data M(1, j) ($1 \leq j \leq 128$) and data corresponding to the scanning line L1 are expressed as data M(i, 1) (1 ≤ i ≤ 2048).

The buffer memory 8 stores the image data in the order expressed by the scanning lines shown in Fig. 2B. In order to fetch the data in the order expressed by the scanning lines shown in Fig. 2A, for example, the image data of the unit areas S1, S2, ..., S256 may be fetched in this order to transpose rows and columns of a matrix formed by the data M(i, j) stored in the respective unit areas, to thereafter store the same in the transmission memory 10.

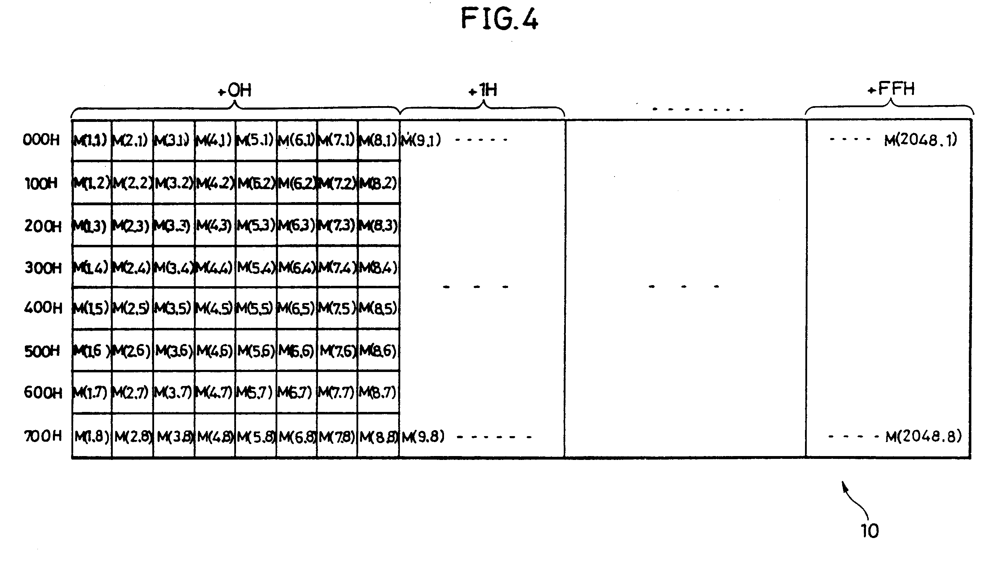

Fig. 4 illustrates exemplary image data thus processed and stored in the transmission memory 10. The storage mode shown in Fig. 4 is implemented as follows: First, the CPU 7 addresses the buffer memory 8, to fetch the unit area S1. Then the CPU 7 supplies the data M(1, 1), ..., M(1, 8), M-(2, 1) ..., M(2, 8) and M(3, 1), ..., M(8, 8) to the matrix conversion circuit 9, to transpose the rows and columns. Thereafter the CPU 7 addresses the transmission memory 10 to write the data byte by byte in the addresses 000H, 100H, 200H, ..., 700H of the transmission memory 10. In other words, data M(1, 1), M(2, 1), M(3, 1), M(4, 1), ..., M(8, 1) are written in the address 000H, the data M(1, 2), M(2, 2), M(3, 2), ..., M(8, 2) are written in the address 100H, ..., and the data M(1, 8), M(2, 8), ..., M(8, 8) are written in the address 700H.

Similar processing is performed for the unit areas S2 to S256, thereby to store the image data in the transmission memory 10, as shown in Fig. 4. In this state, the data are read from the transmission memory 10 byte by byte along the addresses, thereby to sequentially fetch the data M(i, 1) (1 ≤ i ≤ 2048) corresponding to the scanning line L1, data M(i, 2) (1 ≤ i ≤ 2048) corresponding to the scanning line L2, ..., and the data M(i, 8) (1 ≤ i ≤ 2048) corresponding to the scanning line L8. Similar processing is performed over the unit areas S257 to S4096, whereby the entire image data are converted into the arrangement corresponding to the G3 standard.

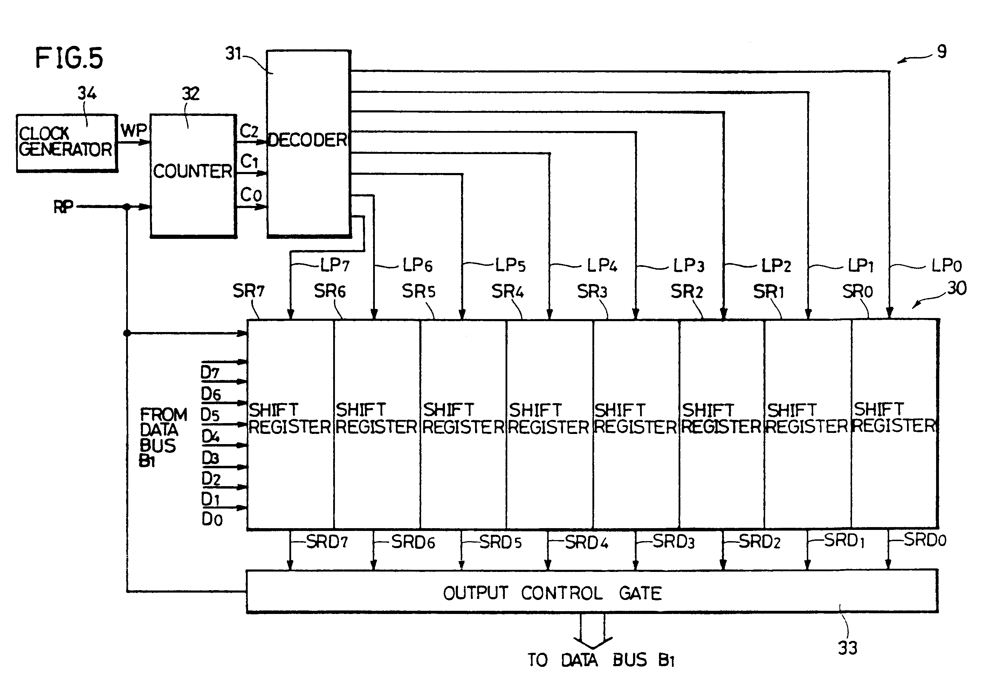

Fig. 5 is a block diagram showing basic structure of the matrix conversion circuit 9 which implements the aforementioned matrix conversion. In transmission, image data stored in the buffer memory 8 are supplied from the data bus B1 to a shift register group 30 formed by shift registers SR0 to SR7, which are storage transmission means, through lines D0 to D7 in an 8-bit parallel manner. All of the shift registers SR0 to SR7 are 8-bit shift registers. A decoder 31 supplies the shift registers SR0 to SR7 with loading pulses, which are input signals, through lines LP0 to LP7 respectively. Upon such supply of the loading pulses, the shift registers SR0 to SR7 input the image data from the data bus B1 through the lines D0 to D7.

A 3-bit counter 32 for counting basic clock signals WP generated from a clock generator 34 supplies its count value to the decoder 31 in a 3-bit parallel manner through lines C2, C1 and C0. The decoder 31 outputs a loading pulse to any one of the lines LP0 to LP7 in response to the supplied count value. The counter 32 receives the basic clock signals WP and reading pulses RP serving as reset signals.

The shift registers SR0 to SR7 supply respective least significant bit data to an output control gate 33 through lines SRD0 to SRD7 respectively. The output control gate 33 is supplied with the reading pulses RP, while the image data are simultaneously supplied to the transmission memory 10 in an 8-bit parallel manner through the data bus B1.

The aforementioned reading pulses RP are supplied to the shift register group 30 as transfer signals, so that respective internal data of the shift registers SR0 to SR7 are bitwisely shifted from the most significant bits toward the least significant bits.

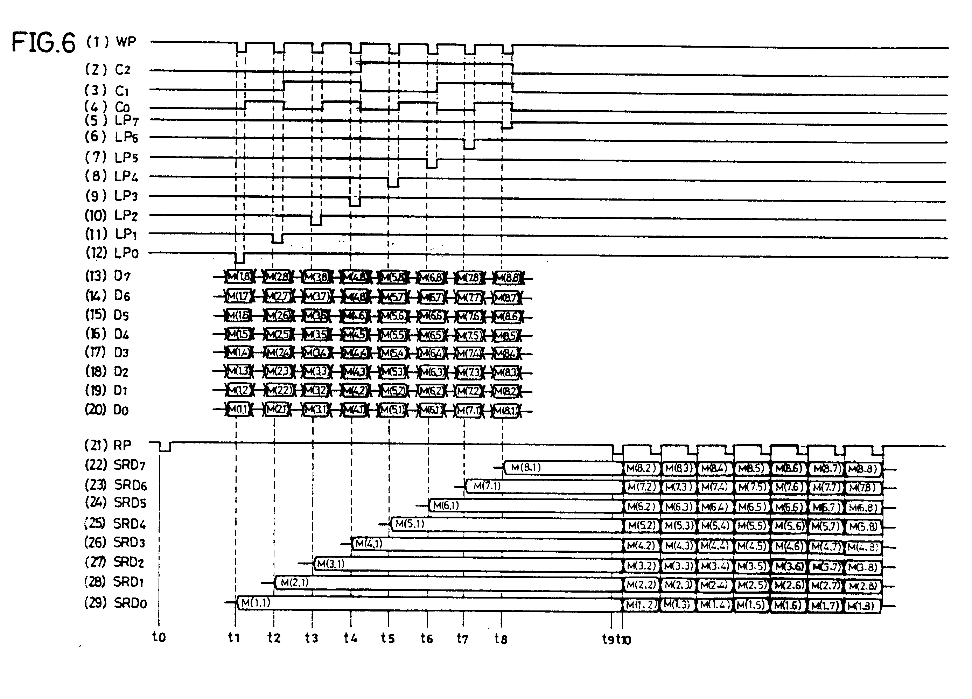

Fig. 6 is a timing chart for illustrating the operation of the matrix conversion circuit 9. Referring to Fig. 6, numeral (1) indicates the basic clock signal WP and numerals (2) to (4) indicate signals derived on the lines C2 to C0 respectively. Numerals (5) to (12) indicate signals derived on the lines LP7 to LP0 respectively and numerals (13) to (20) indicate signals corresponding to data supplied to the shift register group 30, while numeral (21) indicates the reading pulses RP and numerals (22) to (29) indicate signals corresponding to data derived on the lines SRD7 to SRD0 respectively.

The line C0 corresponds to the least significant bit of the counter 32, and the line C2 corresponds to the most significant bit. The signal derived on the line C0 is inverted on a leading edge of the basic clock signal WP and the signal derived on the line C1 is inverted on a trailing edge of the signal derived on the line C0, while the signal derived on the line C2 is inverted on a trailing edge of the signal derived on the line C1.

As to the signals derived on the lines C0 to C2, a low level is expressed as "0" and a high level is expressed as "1" while the line C0 is allotted to the least significant bit, to express count values in binary numbers with decimal notation of k. The decoder 31 derives the loading pulse on a line LPk in synchronization with the basic clock signal WP. Thus, the signals (5) to (12) shown in Fig. 6 are derived on the lines LP7 to LP0 respectively.

Consider such case where the data in the unit area S1 of the buffer memory 8 are inputted in the shift register group 30 through the lines D0 to D7. The data from the unit area S1 are parallelly derived on the lines D0 to D7 in order of the addresses 000H, 010H, 020H, 030H, 040H, 050H, 060H and 070H. The line D0 corresponds to the least significant bit and the line D7 corresponds to the most significant bit of the byte of data stored in each address. Thus, the signals corresponding to the data (13) to (20) in Fig. 6 are derived on the lines D0 to D7.

At a time t0, the reading pulse RP is generated to reset the counter 32. The basic clock signal WP is inputted at a time t1, when the count value of the counter 32 is "000". Thus, the decoder 31 outputs the loading pulse to the line LP0, whereby the 8-bit data currently derived on the lines D0 to D7 are stored in the shift register SR0. Namely, the data M(1, 1), M(1, 2), ..., M(1, 8) are stored in the shift register SR0, and the least significant bit data M(1, 1) is derived on the line SRD0.

At a time t2, the count value of the counter 32 is "001" and hence the loading pulse is derived on the line LP1, whereby the data M(2, 1), ..., M(2, 8) derived on the lines D0 to D7 are stored in the shift register SR1. In a similar manner, the data M(3, 1), ..., M(3, 8), M(4, 1), ..., M(4, 8), M(5, 1), ..., M(5, 8), M(6, 1), ..., M(6, 8), M(7, 1), ..., M(7, 8) and M(8, 1), ..., M(8, 8) are stored in the shift registers SR2, SR3, SR4, SR5, SR6 and SR7 respectively at times t3, t4, t5, t6, t7 and t8.

When the reading pulse RP falls to a low level at a time t9, the output control gate 33 synchronously outputs the data M(1,1), M(2, 1), ..., M(8, 1) to the data bus B1. When the next reading pulse RP rises at a time t10, the shift registers SR0 to SR7 synchronously shift the respective internal data bitwisely from the most significant bits toward the least significant bits. Thus, the signals corresponding to the data M(1, 2), M(2, 2), M(3, 2), ..., M(8, 2) are derived on the lines SDR0 to SDR7 respectively. Thereafter in a similar manner, data reading is performed when the reading pulses RP are at low levels while data shifting is performed in the shift registers SR0 to SR7 on leading edges of the reading pulses RP, thereby to transpose rows and columns with respect to the data M(i, j) ($1 \leq i \leq 8$, $1 \leq j \leq 8$) in the unit area S1. The data thus matrix-converted are stored in the transmission memory 10 as shown in Fig. 4.

In receiving operation, the transmission memory 10 supplies data to the lines D0 to D7 to perform similar matrix conversion, so that the image data are inputted in the buffer memory 8 with address assignment.

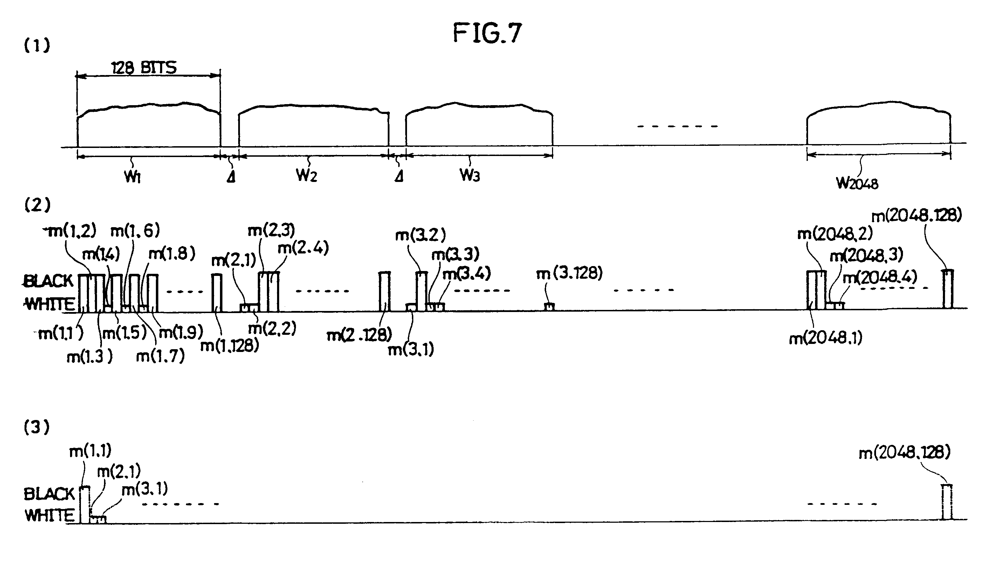

Fig. 7 illustrates signals derived on respective parts of the facsimile machine 1 in transmission. Fig. 7(1) shows an output signal from the photoelectric conversion element 4 and Fig. 7(2) shows the output from the binarizing circuit 5, while Fig. 7(3) shows the output from the P-S converter 11. Referring to Fig. 7(2) and Fig. 7(3), signal parts corresponding to the data M(i, j) ($1 \leq i \leq 2048$, $1 \leq j \leq 128$) of the buffer memory 8 are indicated with symbol m(i, j). The photoelectric conversion element 4 outputs a signal expressed in a period W1 shown in Fig. 7(1) corresponding to the scanning line $\ell 1$ shown in Fig. 2B. In a similar manner, signals expressed in periods W2, ..., W2048 are outputted corresponding to the scanning lines $\ell 2$, ..., $\ell 2048$. Between the periods W1, ..., W2048, no signals are outputted intermittently in retrace intervals $\Delta$.

Referring to Fig. 7(2) and Fig. 7(3), a high level corresponds to a black pixel and a low level corresponds to a white pixel. Output signals from the binarizing circuit 5 correspond to data M(1, 1), M(1, 2), ..., M(1, 128), M(2, 1), ..., M(2, 128), ..., M(2048, 1), ..., M(2048, 128) in order. The data of respective pixels read in such order are outputted in order of data M(1, 1), M(2, 1), M(3, 1), ..., M(2048, 1), M(1, 2), ..., M(2048, 2), ..., M(1, 128), ..., M(2048, 128) in the P-S converter 11, as shown in Fig. 7(3).

As hereinabove described, the data taken in the buffer memory 8 in transmission are subjected to conversion for each of the 8-byte unit areas S1, S2, ..., S4096 according to this embodiment. First, the CPU 7 addresses the buffer memory 8 to fetch the unit area S1 from the buffer memory 8 so that the matrix conversion circuit 9 performs matrix conversion of the data M(i, j) ($1 \leq i \leq 8$, $1 \leq j \leq 8$) in the unit area S1, and the CPU 7 addresses the transmission memory 10 to sequentially input the data in the addresses 000H, 100H, ..., 700H of the transmission memory 10. Then the CPU 7 fetches the unit area S2 and performs matrix conversion to sequentially input the data in the addresses 001H, 101H, ..., 701H of the transmission memory 10. Similar processing is performed on the data in the unit areas S3 to S256 to input the same in the transmission memory 10, whereby the data corresponding to the lines L1 to L8 in Fig. 2A are stored in the transmission memory 10. In this state, the data in the transmission memory 10 are read along the addresses, to perform data transmission in accordance with the G3 standard. Such processing is performed on the unit areas S257 to S512, ..., S3841 to S4096, to transmit image information for single scanning of the original image in order to the G3 standard. Similar processing is performed over the entire original surface, thereby to transmit image information on the entire original image.

In receiving, image data for eight scanning lines by the G3 standard are stored in the transmission memory 10 and thereafter the addresses 000H, 100H, ..., 700H of the transmission memory 10 are specified to fetch 8-byte data of these areas and input the same in the matrix conversion circuit 9 to perform matrix conversion. Further, the addresses 000H, 010H, ..., 070H of the buffer memory 8 are specified to store the data. Then the addresses 001H, 101H, ..., 701H of the transmission memory 10 are specified to perform matrix conversion, and the addresses 080H, 090H, ..., 0F0H of the buffer memory 8 are specified to store the data.

Similar processing is performed on the 8-byte data in the addresses 0FFH, 1FFH, ..., 7FFH of the transmission memory 10, to completely input the data corresponding to the scanning lines L1 to L8 shown in Fig. 2A. When data for the subsequent eight scanning lines are stored in the transmission memory 10, the said data are processed similarly to the above to be stored in the unit areas S257 to S512 of the buffer memory 8. The data are similarly stored in the unit areas S3841 to S4096, thereby to complete storage of data for one scanning line.

Thereafter the data in the buffer memory 8 are fetched along the addresses to be converted into serial signals by the P-S converter 16 to be subjected to scanning by the recording head 15 as shown in Fig. 2B, thereby to start recording. During such recording, the data from the transmission memory 10 are being inputted in areas other than those which are currently subjected to data reading.

In the above processing, the CPU 7 addresses the buffer memory 8 and the transmission memory 10 to perform data transfer in units of eight bits, whereby the same can be maintained sufficiently at a high speed. Through an experiment made by the inventors, it has been confirmed that the processing time per scanning is about 41 msec. when address assignment is performed by the CPU 7 which is implemented by the Z80 processor. Single scanning corresponds to eight scanning lines in the G3 standard. Thus, it is understood that extremely fast processing is enabled with a processing time of about 5 msec. per scanning line. Further, processing other than matrix conversion can be performed in the so-called software manner by the CPU 7, to readily cope with variation in original size and the number of pixels of the reading sensor and the recording head of a counter facsimile machine. In addition, the matrix conversion circuit 9, having simple circuit structure of a small scale, can be easily integrated into the circuit.

Although the matrix conversion is performed in units of eight bits in the above embodiment, such operation may be performed in units of 16 bits x 16 = 32 bytes, for example. In this case, image data are processed in units of 16 bits.

According to the present invention as hereinabove described, transposition/arithmetic processing of data having matrix arrangement stored in a plurality of storage/transfer means is performed at a high speed. Thus, the processing speed for data conversion is greatly improved, while data conversion can be implemented with circuit structure of a small scale.

Although the present invention has been described and illustrated in detail, it is clearly understood that the same is by way of illustration and example only and is not to be taken by way of limitation, the scope of the present invention being limited only by the terms of the appended claims.

## Claims

1. A data converter for performing matrix conversion operations on data, comprising:
   a plurality of storage/transfer means (SR7-SR0) for the storage of respective input multi-bit data;
   a plurality of input lines (D7-D0), one for each bit of said multi-bit data, for the parallel input of multi-bit data to a selected one of said storage/transfer means;
   control means (34, 32, 31, 33) for loading multi-bit data on said plurality of input lines selectively into said storage/transfer means until each storage/transfer means stores said respective multi-bit data, and for transferring data serially out of each of said storage/transfer means for the parallel output of converted multi-bit data each bit of which comprises the output of a respective one of said storage/transfer means.

2. A data converter according to claim 1, wherein said storage/transfer means comprise shift registers whose contents are synchronously shifted in a bit-wise manner to output said converted multi-bit data.

3. A data converter according to claim 1 or claim 2, wherein said control means comprises means for generating sequentially a plurality of control signals (LP7-LP0), each for the loading of input data into a respective one of said storage/transfer means.

4. An image reader in which an image sensing means is arranged to scan an original in a main scan direction (R1) and intermittently to shift in a sub-scan direction (R2), and comprises a row of sensors extending in said sub-scan direction so that the output of each individual sensor for one scan in the main scan direction provides the image data for one main scan line, said image reader comprising:
   first memory means (8) for storing as input data the output of said image sensing means corresponding to at least one scan in said main scan direction;

a data converter (9) for performing matrix conversion operations on groups of input data (S1-S4096) stored in said first memory means to generate respective groups of output data, each group comprising a plurality of multi-bit data; and

second memory means (10) for storing said groups of output data, wherein:

said data converter (9) comprises:

a plurality of storage/transfer means (SR7-SR0) for the storage of respective multi-bit data of the input group;

a plurality of input lines (D7-D0), one for each bit of said multi-bit data, for the parallel input of each bit of a multi-bit data to a selected one of said storage/transfer means; and

control means (34, 32, 31, 33) for loading said multi-bit data on said plurality of input lines selectively into said storage/transfer means until each storage/transfer means stores said respective multi-bit data, and for transferring data serially out of each of said storage/transfer means for the parallel output of the bits of a converted multi-bit data of the output group, each of said bits comprising the output of a respective one of said storage/transfer means, and wherein:

said output of the image sensing means comprises a succession of sub-scan line image data, each sub-scan line ($\ell$1-$\ell$2048) comprising a respective bit of data from each of said sensors, and contains the data bits (M-(1,1) - M(2048, 128)) corresponding to a number of main scan lines (L1-L128) equal to the number of sensors in the image sensing means;

each group of input data comprises the mutually same bits of a group of successive sub-scan lines ($\ell$1-$\ell$8);

each group of output data comprises the mutually same bits of a group of successive main scan lines (L1-L8);

data is stored at addresses in said first memory means in the sequence of generation of said sub-scan line image data by said image sensing means; and

data is stored at addresses in said second memory means in the sequence of successive main scan lines.

5. An image reader according to claim 4, wherein the storage/transfer means of said data converter comprise shift registers whose contents are synchronously shifted in a bit-wise manner to output said converted multi-bit data.

6. An image reader according to claim 4 or claim 5, wherein the control means of said data converter comprises means for generating sequentially a plurality of control signals (LP7-LP0), each for the loading of input data into a respective one of said storage/transfer means.

**Patentansprüche**

1. Datenwandler zum Ausführen von Matrixumwandlungsvorgängen an Daten, mit:
   - mehreren Speicher/Übertragungs-Einrichtungen (SR7-SR0) zum Abspeichern jeweiliger Eingangs-Mehrbitdaten;
   - mehreren Eingangsleitungen (D7-D0) für jeweils ein Bit der Mehrbitdaten, zum parallelen Eingeben von Mehrbitdaten in eine ausgewählte der Speicher/Übertragungs-Einrichtungen;
   - einer Steuereinrichtung (34, 32, 31, 33) zum selektiven Laden von Mehrbitdaten auf den mehreren Eingangsleitungen in die Speicher/Übertragungs-Einrichtungen, bis jede Speicher/Übertragungs-Einrichtung die jeweiligen Mehrbitdaten speichert, und zum seriellen Übertragen der Daten aus jeder der Speicher/Übertragungs-Einrichtungen für parallele Ausgabe umgewandelter Mehrbitdaten, von denen jedes Bit das Ausgangssignal einer jeweiligen der Speicher/Übertragungs-Einrichtungen aufweist.

2. Datenwandler nach Anspruch 1, bei dem die Speicher/Übertragungs-Einrichtung Schieberegister aufweist, deren Inhalte synchron bitweise verschoben werden, um die umgewandelten Mehrbitdaten auszugeben.

3. Datenwandler nach Anspruch 1 oder Anspruch 2, bei dem die Steuereinrichtung eine Einrichtung zum sequentiellen Erzeugen mehrerer Steuersignale (LP7-LP0) umfaßt, von denen jedes zum Laden von Eingangsdaten in eine jeweilige der Speicher/Übertragungseinrichtungen dient.

4. Bildleser, bei dem eine Bildleseeinrichtung so angeordnet ist, daß sie ein Original in einer Hauptabrasterrichtung (R1) abrastert und in einer Unterabrasterrichtung (R2) intermittierend verschiebt, und der eine Reihe von Sensoren aufweist, die sich in der Unterabrasterrichtung erstrecken, so daß das Ausgangssignal jedes einzelnen Sensors bei einer Abrasterung in der Hauptabrasterrichtung die Bilddaten für eine Hauptabrasterzeile liefert, mit:
   - einer ersten Speichereinrichtung (8) zum Abspeichern des Ausgangssignals der Bildleseeinrichtung für mindestens eine Abrasterung in der Hauptabrasterrichtung als Eingangsdaten;

- einem Datenwandler (9) zum Ausführen von Matrixumwandlungsvorgängen an Gruppen von Eingangsdaten (S1-S4096), die in der ersten Speichereinrichtung abgespeichert sind, um jeweilige Gruppen von Ausgangsdaten zu erzeugen, wobei jede Gruppe mehrere Mehrbitdaten umfaßt; und

- einer zweiten Speichereinrichtung (10) zum Abspeichern der Gruppen von Ausgangsdaten, wobei:

- der Datenwandler (9) folgendes aufweist:
  -- mehrere Speicher/Übertragungs-Einrichtungen (SR7-SR0) zum Abspeichern jeweiliger Mehrbitdaten der Eingabegruppe;
  -- mehrere Eingangsleitungen (D7-D0), und zwar jeweils eine für jedes Bit der Mehrbitdaten, für Paralleleingabe jedes Bits eines Mehrbitdatenwerts in eine ausgewählte der Speicher/Übertragungseinrichtungen; und
  -- eine Steuereinrichtung (34, 32, 31, 33) zum selektiven Laden der Mehrbitdaten auf den mehreren Eingangsleitungen in die Speicher/Übertragungs-Einrichtung, bis jede Speicher/Übertragungs-Einrichtung die jeweiligen Mehrbitdaten speichert, und zum seriellen Übertragen von Daten aus jeder der Speicher/Übertragungseinrichtungen zur parallelen Ausgabe der Bits eines umgewandelten Mehrbitdatenwerts aus der Ausgabegruppe, wobei jedes der Bits das Ausgangssignal einer jeweiligen der Speicher/Übertragungs-Einrichtungen ist; und wobei:

- das Ausgangssignal der Bildleseeinrichtung eine Folge von Unterabrasterzeile-Bilddaten aufweist, wobei jede Unterabrasterzeile (I1-I2048) ein jeweiliges Bit der Daten aus jedem der Sensoren aufweist und die Datenbits (M(1, 1) - M(2048, 128)) enthält, die der Zahl von Hauptabrasterzeilen (L1-L128) entsprechen, die der Zahl von Sensoren in der Bildleseeinrichtung gleich ist;

- jede Gruppe von Eingangsdaten die wechselseitig gleichen Bits einer Gruppe folgender Unterabrasterzeilen (I1-I8) umfaßt;

- jede Gruppe von Ausgangsdaten die wechselseitig gleichen Bits einer Gruppe folgender Hauptabrasterzeilen (L1-L8) umfaßt;

- Daten in der ersten Speichereinrichtung unter Adressen in der Folge der Erzeugung der Unterabrasterzeilen-Bilddaten durch die Bildleseeinrichtung abgespeichert werden; und

- Daten in der zweiten Speichereinrichtung unter Adressen in der Folge aufeinanderfolgender Hauptabrasterzeilen abgespeichert werden.

5. Bildleser nach Anspruch 4, bei dem Speicher/Übertragungs-Einrichtung des Bildumwandlers Schieberegister aufweist, deren Inhalte synchron und bitweise verschoben werden, um die umgewandelten Mehrbitdaten auszugeben.

6. Bildleser nach Anspruch 4 oder Anspruch 5, bei dem die Steuereinrichtung des Datenwandlers eine Einrichtung zum sequentiellen Erzeugen mehrerer Steuersignale (LP7-LP0) aufweist, von denen jedes dazu dient, einen Eingangsdatenwert in eine jeweilige der Speicher/Übertragungseinrichtungen zu laden.

**Revendications**

1. Convertisseur de données pour exécuter des opérations de conversion matricielle sur des données, comprenant :

    une pluralité de moyens de stockage/transfert (SR7-SR0), pour le stockage de données multi-bits d'entrée respectives.;

    une pluralité de lignes d'entrée (D7-D0), une pour chaque bit desdites données multi-bits, pour l'entrée parallèle de données multi-bits dans l'un choisi desdits moyens de stockage/transfert ;

    des moyens de commande (34, 32, 31, 33) pour charger sélectivement des données multi-bits apparaissant sur ladite pluralité de lignes d'entrée dans lesdits moyens de stockage/transfert jusqu'à ce que chaque moyen de stockage/transfert stocke lesdites données multi-bits respectives, et pour transférer en série les données à partir de chacun desdits moyens de stockage/transfert pour effectuer la sortie parallèle de données multi-bits converties, dont chaque bit constitue la sortie d'un, respectif, desdits moyens de stockage/transfert.

2. Convertisseur de données selon la revendication 1, dans lequel lesdits moyens de stockage/transfert comprennent des registres à décalage dont les contenus sont décalés en synchronisme dans un mode bit par bit pour sortir lesdites données multi-bits converties.

3. Convertisseur de données selon la revendication 1 ou la revendication 2, dans lequel lesdits moyens de commande comprennent des moyens pour engendrer séquentiellement une pluralité de signaux de commande (LP7-LP0), chacun pour le chargement de données d'entrée dans un, respectif, desdits moyens de stockage/transfert.

4. Lecteur d'images dans lequel un moyen sensible aux images est agencé pour balayer un original dans une direction de balayage principal (R1) et pour se décaler par intermittence entre une direction de balayage secondaire (R2), qui comprend une rangée de capteurs s'étendant dans ladite direction de balayage secondaire, de sorte que la sortie de chaque capteur individuel pour un balayage dans la direction de balayage principal fournit les données d'image pour une ligne du balayage principal, ledit lecteur d'images comprenant :

des premiers moyens de mémoire (8) pour stocker comme données d'entrée la sortie dudit moyen sensible aux images qui correspond à au moins un balayage dans ladite direction de balayage principal ;

un convertisseur de données (9) pour effectuer des opérations de conversion matricielle sur des groupes de données d'entrée (S1-S4096) stockées dans lesdits premiers moyens de mémoire pour engendrer des groupes respectifs de données de sortie, chaque groupe comprenant une pluralité de données multi-bits ; et

des deuxièmes moyens de mémoire (10) pour stocker lesdits groupes de données de sortie, dans lequel :

ledit convertisseur de données (9) comprend :

une pluralité de moyens de stockage/transfert (SR7-SR0) pour le stockage de données multi-bits respectives du groupe d'entrée ;

une pluralité de lignes d'entrée (D7-D0), une pour chaque bit desdites données multi-bits, pour l'entrée parallèle de chaque bit d'une donnée multi-bits dans un, sélectionné, desdits moyens de stockage/transfert ; et

des moyens de commande (34, 32, 31, 33) pour charger sélectivement lesdites données multi-bits apparaissant sur ladite pluralité de lignes d'entrée dans lesdits moyens de stockage/transfert jusqu'à ce que chaque moyen de stockage/transfert stocke lesdites données multi-bits respectives, et pour transférer en série des données à partir de chacun desdits moyens de stockage/transfert pour effectuer la sortie parallèle des bits d'une donnée multi-bit convertie du groupe de sortie, chacun desdits bits constituant la sortie d'un, respectif, desdits moyens de stockage/transfert, et dans lequel

ladite sortie dudit moyen sensible aux images comprend une succession de données d'images de lignes de balayage secondaire, chaque ligne de balayage secondaire (ℓ1-ℓ2048) comprenant un bit respectif de donnée issu de chacun desdits capteurs, et contient les bits de données (M(1, 1) - M(2048, 128)) correspondant à un nombre de lignes de balayage principal (L1-L128) égal au nombre des capteurs inclus dans le moyen sensible aux images ;

chaque groupe de données d'entrée comprend les bits mutuellement identiques d'un groupe de lignes successives de balayage secondaire (ℓ1-ℓ8),

chaque groupe de données de sortie comprend les bits mutuellement identiques d'un groupe de lignes successives (L1-L8) du balayage principal ;

la donnée est stockée à des adresses desdits premiers moyens de mémoire selon la séquence de la génération desdites données d'image de ligne de balayage secondaire par ledit moyen sensible aux images ; et

la donnée est stockée à des adresses desdits deuxièmes moyens de mémoire selon la séquence des lignes successives du balayage principal.

5. Lecteur d'images selon la revendication 4, dans lequel lesdits moyens de stockage/transfert dudit convertisseur de données comprennent des registres à décalage dont les contenus sont décalés en synchronisme dans le mode bit par bit pour sortir lesdites données multi-bits converties.

6. Lecteur d'images selon la revendication 4 ou la revendication 5, dans lequel les moyens de commande dudit convertisseur de données comprennent des moyens pour engendrer séquentiellement une pluralité de signaux de commande (LP7-LP0), chacun pour le chargement de données d'entrée dans un, respectif, desdits moyens de stockage/transfert.

# FIG.1

# FIG.2A

R1

L1

R2

L2

L3

L128

20

Ln

2048 PIXELS

# FIG.2B

R1

ℓ1  ℓ2  ℓ2048

ℓ3

R2

128 PIXELS

20

FIG.3

EP 0 310 432 B1

# FIG.4

|  | +OH | | | | | | | | +1H | | ....... | +FFH |
|---|---|---|---|---|---|---|---|---|---|---|---|---|
| 000H | M(1,1) | M(2,1) | M(3,1) | M(4,1) | M(5,1) | M(6,1) | M(7,1) | M(8,1) | M(9,1) - - - - - | | | - - - - M(2048,1) |
| 100H | M(1,2) | M(2,2) | M(3,2) | M(4,2) | M(5,2) | M(6,2) | M(7,2) | M(8,2) | | | | |
| 200H | M(1,3) | M(2,3) | M(3,3) | M(4,3) | M(5,3) | M(6,3) | M(7,3) | M(8,3) | | | | |
| 300H | M(1,4) | M(2,4) | M(3,4) | M(4,4) | M(5,4) | M(6,4) | M(7,4) | M(8,4) | | | | |
| 400H | M(1,5) | M(2,5) | M(3,5) | M(4,5) | M(5,5) | M(6,5) | M(7,5) | M(8,5) | - - - | | - - - | |
| 500H | M(1,6) | M(2,6) | M(3,6) | M(4,6) | M(5,6) | M(6,6) | M(7,6) | M(8,6) | | | | |
| 600H | M(1,7) | M(2,7) | M(3,7) | M(4,7) | M(5,7) | M(6,7) | M(7,7) | M(8,7) | | | | |
| 700H | M(1,8) | M(2,8) | M(3,8) | M(4,8) | M(5,8) | M(6,8) | M(7,8) | M(8,8) | M(9,8) - - - - - - | | | - - - - M(2048,8) |

10

EP 0 310 432 B1

FIG.5

FIG.6

(1) WP
(2) C2
(3) C1
(4) C0
(5) LP7
(6) LP6
(7) LP5
(8) LP4
(9) LP3
(10) LP2
(11) LP1
(12) LP0

(13) D7
(14) D6
(15) D5
(16) D4
(17) D3
(18) D2
(19) D1
(20) D0

(21) RP
(22) SRD7
(23) SRD6
(24) SRD5
(25) SRD4
(26) SRD3
(27) SRD2
(28) SRD1
(29) SRD0

t0  t1  t2  t3  t4  t5  t6  t7  t8  t9 t10

EP 0 310 432 B1

# FIG.7

(1)

$W_1$    $\Delta$    $W_2$    $\Delta$    $W_3$      $W_{2048}$

128 BITS

(2)

BLACK
WHITE

m(1,2)   m(1,6)   m(2,3)   m(3,2)   m(2048,2)   m(2048,128)
m(1,4)   m(1,8)   m(2,4)   m(3,3)   m(2048,3)
m(2,1)   m(3,4)   m(3,128)   m(2048,4)
m(1,1)   m(1,5)   m(1,9)   m(2,2)   m(2,128)   m(3,1)   m(2048,1)
m(1,3)   m(1,7)   m(1,128)

(3)

BLACK
WHITE

m(1,1)   m(2048,128)
m(2,1)
m(3,1)

EP 0 310 432 B1